# EUROPEAN PATENT APPLICATION

(11) **EP 3 904 701 A1**
(43) Date of publication of application: **03.11.2021**
(21) Application number: 19903364.8
(22) Date of filing: 21.06.2019
(51) Int. Cl.: F16B 2/08, B60R 16/02, F16B 2/10, H02G 3/32

(54) **CLAMP**

(30) Priority: 25.12.2018 JP 2018241513
(71) Applicant: HellermannTyton Co., Ltd., Tokyo 151-0073 (JP)
(72) Inventor: SEKI, Yusuke, Nagoya-shi, Aichi 460-0008 (JP)
(74) Representative: Fleuchaus, Michael A.
(86) International application number: PCT/JP2019/024694
(87) International publication number: WO 2020/136949

(57) **Abstract**

A clamp is provided, which has a simple structure capable of holding linear members of various sizes. The clamp includes a supporting member, a movable arm, and a fixed arm. The movable arm is swingably connected to the supporting member. The fixed arm has a base end portion fixed to the supporting member. The movable arm can swing between a closed position, where a tip end portion of the movable arm is adjacent to a tip end portion of the fixed arm, and an open position, where the tip end portion of the movable arm is placed farther from the tip end portion of the fixed arm. Both the movable arm and the fixed arm can elastically deform to displace their respective tip end portions relative to each other.

## Description

### TECHNICAL FIELD

The invention relates to technologies of fixing members, in particular, clamps for fixing linear members.

### BACKGROUND ART

A lot of linear members such as LAN cables, power cords, and telephone lines, are tangled within typical offices and workrooms. Other than buildings, for example, electric appliances and vehicles contain many linear members such as harnesses, cables, and hoses throughout their bodies. Clamps are a kind of tools for bundling and fixing such linear members (see Patent Literatures 1-3.) Clamps each include one or more components in the shape of a partial or perfect ring and hold a single linear member or a bundle of linear members inside the ring. Clamps holding linear members are secured to walls, floors, or the likes of buildings or vehicles, and thus, the linear members are fixed to the buildings or vehicles.

### CITATION LIST

### Patent Literature

Patent Literature 1: JP 2018-525577 A
Patent Literature 2: JP 2015-033257 A
Patent Literature 3: JP H10-073193 A

### SUMMARY OF INVENTION

Linear members to be fixed with clamps, such as harnesses, cables, and hoses, generally have various diameters and are bundled into various sizes. Selecting clamps with different sizes depending on sizes of linear members to be fixed is burdensome and likely to increase component count. On the other hand, enabling a single clamp to hold linear members with various sizes generally results in a complex structure of the clamp. This can prevent reduction in manufacture cost of the clamp and complicate handling thereof.

An object of the invention is to solve the above-described problems, in particular, to provide a clamp with a simple structure capable of holding linear members with various sizes.

### MEANS FOR SOLVING THE PROBLEMS

A clamp according to one aspect of the invention is used for fixing a linear member. The clamp includes a supporting member, a movable arm, and a fixed arm. The movable arm is swingably connected to the supporting member. The fixed arm has a base end portion fixed to the supporting member. The movable arm can swing between a closed position, where a tip end portion of the movable arm is adjacent to a tip end portion of the fixed arm, and an open position, where the tip end portion of the movable arm is placed farther from the tip end portion of the fixed arm. Both the movable arm and the fixed arm can elastically deform to displace their respective tip end portions relative to each other.

Both the movable arm and the fixed arm may include elastic members. The supporting member and a base end portion of the movable arm may include lock mechanisms configured to interlock with each other. When the movable arm moves from the open position to the closed position, the lock mechanisms may interlock with each other to secure the movable arm to the supporting member.

### ADVANTAGEOUS EFFECT OF INVENTION

In the clamp according to the one aspect of the invention, both the movable arm swingably connected to the supporting member and the fixed arm secured to the supporting member can elastically deform. This can provide the clamp with a simple structure capable of holding linear members with various sizes.

### BRIEF DESCRIPTION OF DRAWINGS

FIG. 1 is a perspective view of an appearance of a hose clamp according to an embodiment of the invention;
FIG. 2A is a side view of the hose clamp of FIG. 1 in an open position;
FIG. 2B is a side view of the hose clamp of FIG. 1 in a closed position;
FIG. 3A is a side view of the hose clamp holding the thinnest linear member among linear members that the hose clamp can hold;
FIG. 3B is a side view of the hose clamp holding the thickest linear member;
FIG. 4A is a perspective view of a hose clamp whose supporting member has a cable tie;
FIG. 4B is a perspective view of a hose clamp whose supporting member has a boss and a groove; and
FIG. 4C is a perspective view of the hose clamp of FIG. 4B whose groove engages with a boss of another hose clamp.

### DESCRIPTION OF EMBODIMENTS

The following will describe an embodiment of the invention with reference to the drawings.

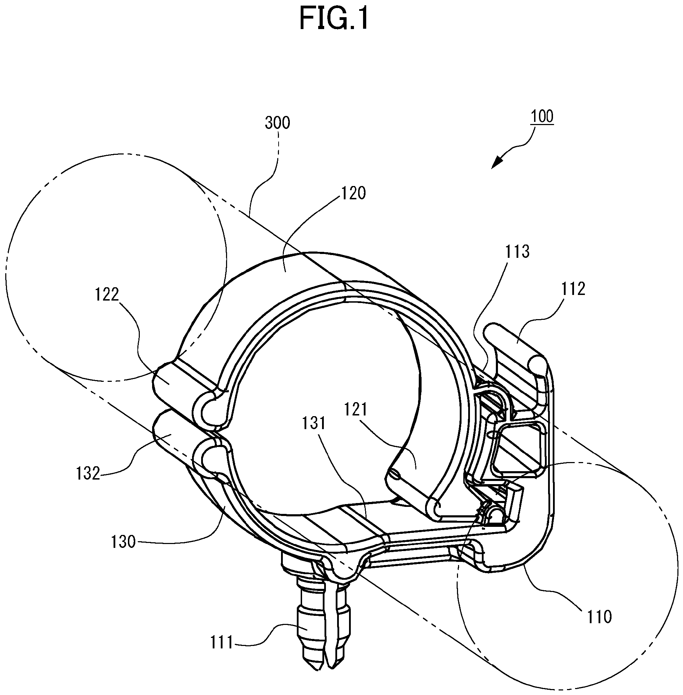

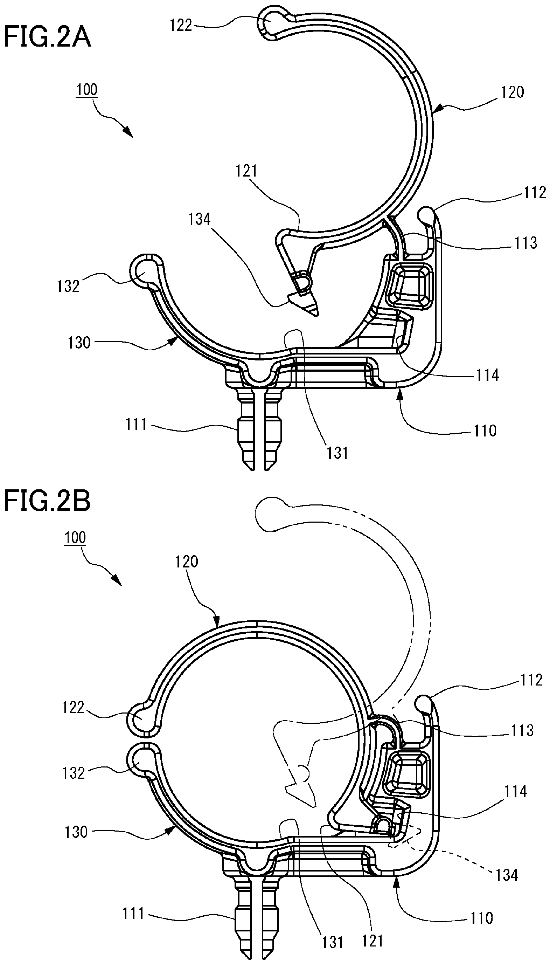

FIG. 1 is a perspective view of an appearance of a hose clamp 100 according to an embodiment of the invention. FIGS. 2A and 2B are side views of the hose clamp 100. The hose clamp 100 is used to fix a linear member 300 such as a harness or a hose inside a vehicle. The hose clamp 100 includes a supporting member 110, a movable arm 120, and a fixed arm 130. All the members 110-130 are made of thermoplastic resin and integrally formed by injection molding.

The supporting member 110 is, for example, an L-shaped member and has a larger thickness and a higher stiffness than other members 120 and 130. The supporting member 110 has a projection pair 111 at one end of the L shape (a lower end in the figures) and a stopper 112 and a hinge 113 at another end of the L shape (an upper end in the figures). The projection pair 111 protrudes downward from a bottom surface of the supporting member 110 and is connected by snap fit to a hole of a fixed member such as a body of a vehicle. (Due to the elasticity, the projection pair 111 can enter the hole of an inner diameter smaller than the outer diameter of the projection pair 111, and then, engage convex portions on an external surface of the projection pair 111 with the hole). Both the stopper 112 and the hinge 113 protrude upward from a top surface of the supporting member 110. The stopper 112 limits the swing range of the movable arm 120 and prevents the hinge 113 from contacting foreign objects. The hinge 113 is a single portion connecting the movable arm 120 with the supporting member 110. The hinge 113 is thinner and more elastic than any other portions of the supporting member 110.

The movable arm 120 is, for example, an arc-shaped member with a central angle of about 240 degrees. An external surface of the movable arm 120 is partially connected to the hinge 113 of the supporting member 110. Elastic deformation of the hinge 113 enables the movable arm 120 to swing around the hinge 113.

The fixed arm 130 is, for example, an arc-shaped member with a central angle of about 120 degrees. A base end portion 131 (a lower end portion in the figures) of the arc shape is fixed to the supporting member 110. The arc shape of the fixed arm 130 has the same radius as that of the movable arm 120.

The movable arm 120 can swing between an open position shown in FIG. 2A and a closed position shown in FIG. 2B. In the open position, a tip end portion 122 of the movable arm 120 is placed the farthest from a tip end portion 132 of the fixed arm 130. If the movable arm 120 moves beyond the open position and is reaching the outside of the motion range, an external periphery of the movable arm 120 contacts the stopper 112 to prevent the movable arm 120 from moving on. In the closed position, the tip end portion 122 of the movable arm 120 is placed the nearest to the tip end portion 132 of the fixed arm 130. The movable arm 120 in the closed position and the fixed arm 130 form a substantially single circle. As shown in FIG. 1, inside the circle, the linear member 300 is placed and held.

The supporting member 110 and a base end portion 121 of the movable arm 120 include lock mechanisms that can interlock with each other. The lock mechanisms include a hole 114 on an inner surface of a center portion of the supporting member 110 and a hook 134 protruding from the base end portion 121 of the movable arm 120. As shown in FIG. 2A, the hook 134 of the movable arm 120 protrudes in a radial direction of the movable arm 120. When the movable arm 120 moves from the open position to the closed position, the hook 134 is fixed by snap fit to the hole 114 of the supporting member 110. That is, the hook 134 is put inside the hole 114 and engages its tip end with an inner surface of the hole 114. Thus, the linear member 300 is firmly confined inside the circle formed by the movable arm 120 and the fixed arm 130.

Since the movable arm 120 and the fixed arm 130 are thicker than the hinge 113 but thinner than the supporting member 110, the arms 120 and 130 have a higher stiffness than the hinge 113 but are elastically deformable in contrast to the supporting member 110. Elasticity of both the arms 120 and 130 enables the hose clamp 100 to hold linear members 300 of diameters within a broader range as described below.

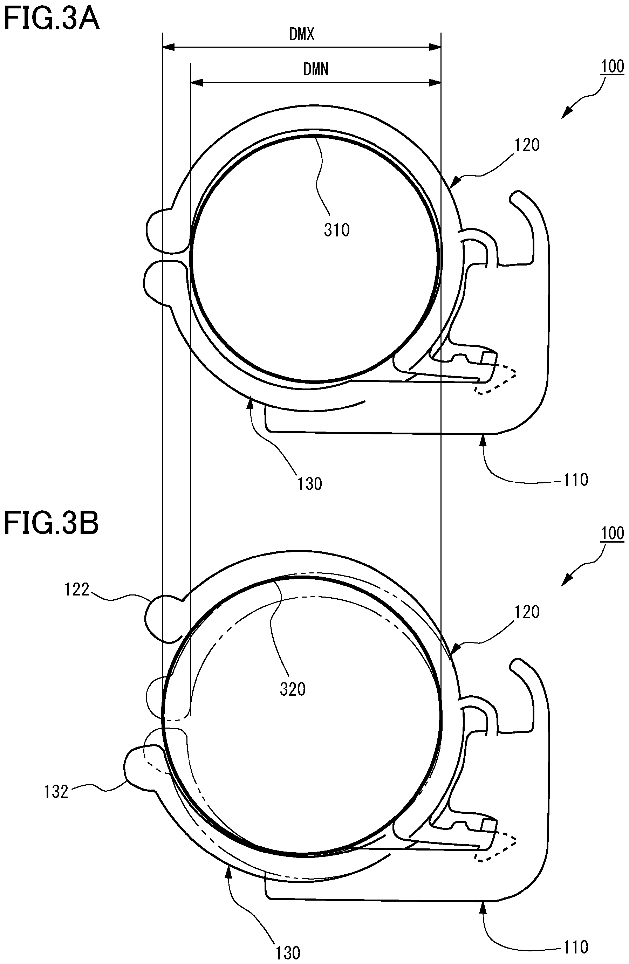

FIG. 3A is a side view of the hose clamp 100 holding the thinnest linear member among linear members 300 that the hose clamp 100 can hold, and FIG. 3B is a side view of the hose clamp 100 holding the thickest linear member. In FIG. 3A, neither the movable arm 120 nor the fixed arm 130 elastically deforms but keeps an original circle 310. The inner diameter of the circle 310 is equal to the outer diameter DMN of the thinnest linear member that the hose clamp 100 can hold. In FIG. 3B, both the movable arm 120 and the fixed arm 130 elastically deform to the maximum within an acceptable range to maximally increase the distance between the tip end portions 122 and 132 of the arms 120 and 130. Under this condition, a circle 320 including sections formed by both the arms 120 and 130 has an inner diameter equal to the outer diameter DMX of the thickest linear member that the hose clamp 100 can hold. In this manner, both the arms 120 and 130 elastically deform to various sizes depending on the outer diameter of the linear member 300 to be held, and thus, the range in outer diameter of the linear member 300 that the hose clamp 100 can hold extends from the minimum DMN to the maximum DMX.

### [Merits of Embodiment]

The hose clamp 100 according to the embodiment of the invention has the movable arm 120 swingably connected to the supporting member 110 and the fixed arm 130 secured to the supporting member 110. Both the arms 120 and 130 can elastically deform, in particular, displace their respective tip end portions 122 and 132 relative to each other. Elastic deformation of both the arms 120 and 130 depending on the outer diameter of the linear member 300 to be held can extend the range in outer diameter of the linear member 300 that the hose clamp 100 can hold from the minimum DMN to the maximum DMX. Thus, the hose clamp 100 has the simple structure capable of holding linear members 300 with various sizes.

### [Modifications]

(A) The hose clamp 100 according to the above-described embodiment of the invention is made entirely of thermoplastic resin by integral molding. Alternatively, one or more of the supporting members 110, the movable arm 120, and the fixed arm 130 may be made separately from the others. One or more of them 110, 120, and 130 may be made of other substance such as metal. In this case, the movable arm and the fixed arm only need to have appropriate elasticity by containing an elastic member such as a spring or a portion made of flexible resin.

(B) The hose clamp 100 according to the above-described embodiment of the invention is fixed by connecting the projection pair 111 of the supporting member 110 with the hole of the fixed member by snap fit. However, the structure for fixing the clamp is not limited to this example.

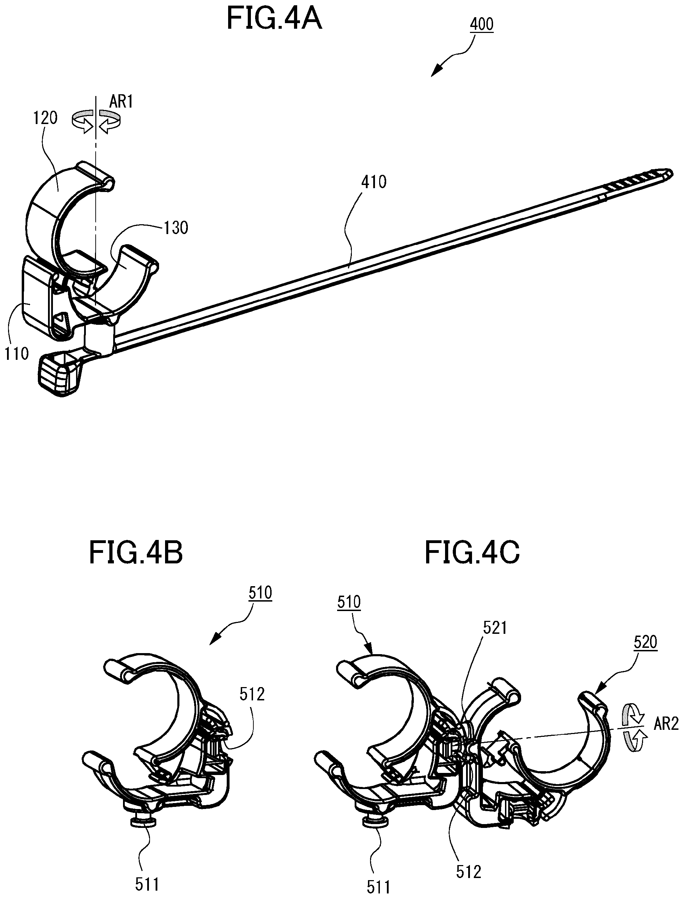

FIG. 4A is a perspective view of a hose clamp 400 whose supporting member 110 has a cable tie 410 instead of the projection pair 111. The cable tie 410 is wound around either a linear member different from the linear member 300 held by the hose clamp 400, or a fixed member such as a body of a vehicle so that the hose clamp 400 can be fixed. The cable tie 410 may extend in a direction as shown in FIG. 4A, or orthogonally to the direction. Alternatively, the cable tie 410 may be rotatably connected to the supporting member 110 (cf. an arrow AR1 shown in FIG. 4A).

FIG. 4B is a perspective view of a hose clamp 510 whose supporting member 110 has a boss 511 and a groove 512 instead of the projection pair 111. The boss 511 is a cylindrical projection protruding downward from one end (a lower end in FIG. 4B) of the L shape of the supporting member 110. The groove 512 is provided on an external surface of another end (an upper end in FIG. 4B) of the L shape of the supporting member 110. The groove 512 has the same width as the boss 511 and can be engaged with a boss 521 of another hose clamp 520. FIG. 4C is a perspective view of the former hose clamp 510 whose groove 512 is engaged with the boss 521 of the latter hose clamp 520. As shown in FIG. 4C, the two hose clamps 510 and 520 become unified, and thus, when the former 510 holds a linear member 300 to be fixed and the latter 520 holds a fixed member or another linear member, the entirety of the members are fixed. Since the boss 521 can rotate relative to the groove 512, the two hose clamps can change the angle therebetween (cf. an arrow AR2 shown in FIG. 4C).

## Claims

1. A clamp (100) for fixing a linear member (300), comprising:
a supporting member (110);
a movable arm (120) swingably connected to the supporting member (110); and
a fixed arm (130) including a base end portion (131) fixed to the supporting member (110), wherein:
the movable arm (120) can swing between a closed position (FIG. 3A), where a tip end portion (122) of the movable arm (120) is adjacent to a tip end portion (132) of the fixed arm (130), and an open position (FIG. 3B), where the tip end portion (122) of the movable arm (120) is placed farther from the tip end portion (132) of the fixed arm (130); and
both the movable arm (120) and the fixed arm (130) can elastically deform to displace their respective tip end portions (122, 132) relative to each other.

2. The clamp (100) according to claim 1, wherein both the movable arm (120) and the fixed arm (130) include elastic members.

3. The clamp (110) according to claim 1 or 2, wherein:
the supporting member (110) and a base end portion (121) of the movable arm (120) include lock mechanisms (114, 134) configured to interlock with each other; and
when the movable arm (120) moves from the open position to the closed position, the lock mechanisms (114, 134) interlock with each other to secure the movable arm (120) to the supporting member (110).
